# EUROPÄISCHE PATENTSCHRIFT

(11) **EP 3 327 259 B1**
(45) Veröffentlichungstag und Bekanntmachung des Hinweises auf die Patenterteilung: **28.10.2020**
(21) Anmeldenummer: 17202507.4
(22) Anmeldetag: 20.11.2017
(51) Int. Cl.: F01D 25/18

(54) **BAUEINHEIT ZUR ANORDNUNG AN EINEM HYDRAULIKFLUIDTANK EINES STRAHLTRIEBWERKS**
UNIT FOR ASSEMBLY ON A HYDRAULIC FLUID TANK OF A JET ENGINE
COMPOSANT DESTINÉ À ÊTRE DISPOSÉ SUR UN RÉSERVOIR DE FLUIDE HYDRAULIQUE D'UN MOTEUR À RÉACTION

(30) Priorität: 23.11.2016 DE 102016122582
(43) Veröffentlichungstag der Anmeldung: 30.05.2018
(73) Patentinhaber: Rolls-Royce Deutschland Ltd & Co KG, 15827 Blankenfelde-Mahlow (DE)
(72) Erfinder: Venter, Gideon, 15827 Blankenfelde-Mahlow (DE); Kalms, Andre, 15827 Blankenfelde-Mahlow (DE)
(74) Vertreter: Schmidt, Martin Michael

(56) Entgegenhaltungen:
- DE-A1-102014 102 776
- GB-A- 2 453 837
- JP-A- H0 711 914

## Beschreibung

Die Erfindung betrifft eine Anordnung mit einem Hydraulikfluidtank eines Strahltriebwerks und einer daran angeordneten Baueinheit mit wenigstens einer Auslasseinrichtung und mit wenigstens einer Messeinrichtung gemäß der im Patentanspruch 1 näher definierten Art.

Aus der Praxis sind Strahltriebwerke hinlänglich bekannt, bei denen zur Ölversorgung insbesondere einer Hilfsgerätegetriebeeinrichtung und Triebwerkslagern ein einen Öltank aufweisender Ölkreislauf vorgesehen ist. Um einen gegebenenfalls unerwünscht niedrigen Ölstand in dem Öltank bei ausgeschaltetem Strahltriebwerk automatisiert auffüllen zu können, ist dem Öltank durch eine cockpitseitige Anforderung mittels einer Pumpe Öl aus einem an dem Flugzeug montierten weiteren Öltank zuführbar. Im Bereich einer Zuführleitung zu dem Öltank ist dabei ein Einlassventil vorgesehen, das in einen offenen Betriebszustand überführt wird, wenn ein von der Pumpe in Richtung des Öltanks geförderter Öldruck eine Kraft auf das Einlassventil ausübt, die eine definierte Kraft übersteigt. Der Öltank wird von der Pumpe automatisiert befüllt bis eine Messeinrichtung einen gewünschten Füllstand in dem Öltank detektiert. Um eine Überfüllung des Öltanks zu verhindern ist an bekannten Öltanks zudem eine Auslasseinrichtung mit einer von einem Auslassventil verschließbaren Auslassöffnung angeordnet. Über das als Überlaufventil ausgeführte Auslassventil wird bei Überschreiten eines definierten Ölstandes und geöffnetem Auslassventil Öl aus dem Öltank abgeführt.

Um das vorhandene Volumen des Öltanks möglichst optimal ausnutzen und einen vorteilhaft kleinen Öltank bereitstellen zu können, ist eine genaue Kalibrierung der Auslasseinrichtung mit der Auslassöffnung und der Messeinrichtung erforderlich. Für den Fall, dass die Auslassöffnung in Hochrichtung zu tief angeordnet ist, kann es beispielsweise dazu kommen, dass die Messeinrichtung einen Ölstand detektiert, der ein weiteres Befüllen des Öltanks mit Öl erlaubt, wobei über das Überlaufventil in unerwünschter Weise bereits Öl aus dem Öltank abgeführt wird. Dies kann im Extremfall zu einer vollständigen Entleerung des weiteren Öltanks führen. Falls die Auslassöffnung dagegen in Hochrichtung unerwünscht hoch angeordnet ist, ist ein durch die Auslasseinrichtung begrenztes maximales Ölvolumen in dem Öltank mit entsprechenden Auswirkungen auf ein Gesamtgewicht nachteilhafterweise groß.

Die Auslassöffnung der Auslasseinrichtung und die Messeinrichtung sind bei bekannten Ausführungen zueinander versetzt an dem Öltank angeordnet. Wenn der Öltank beispielsweise durch eine Neigung des Strahltriebwerks und/oder durch eine Neigung eines Untergrunds, auf dem sich ein Flugzeug mit einem den Öltank umfassenden Strahltriebwerk befindet, gegenüber einer Horizontalen geneigt ist, ist hierdurch eine Befüllung des Öltanks in gewünschtem Umfang zusätzlich erschwert. Strenge Toleranzanforderungen hinsichtlich eines zu erzielenden Ölfüllstandes können hierdurch unter Umständen nicht eingehalten werden.

Eine Kalibrierung sowohl der Messeinrichtung als auch eine Positionierung der Auslassöffnung ist bei bekannten Ausführungen nach der jeweiligen Montage an dem Öltank durchzuführen, wobei sowohl die Kalibrierung der Messeinrichtung als auch die Positionierung der Auslassöffnung nachteilhafterweise aufwändig ist.

Die JP H07 11914 A offenbart einen Öltank für eine Turbine, welcher eine Ölauslassöffnung aufweist, die über eine Leitung mit einem extern angeordneten Füllstandsmesser verbindbar ist.

Des Weiteren ist aus der GB 2 453 837 A ein Öltank für ein Strahltriebwerk bekannt, der mit einer Tankdeckelanordnung ausgebildet ist, welche als Überlauf dienen kann und in der ein Ölmessstab angeordnet sein kann.

Der vorliegenden Erfindung liegt die Aufgabe zugrunde, eine Anordnung mit einem Hydraulikfluidtank eines Strahltriebwerks und einer daran angeordneten Baueinheit mit wenigstens einer Auslasseinrichtung zur Abführung von Hydraulikfluid aus dem Hydraulikfluidtank und mit wenigstens einer Messeinrichtung zu schaffen, mit der eine Montage einer Messeinrichtung und einer Auslasseinrichtung an einem Hydraulikfluidtank und eine Kalibrierung bzw. Positionierung der Messeinrichtung bzw. der Auslasseinrichtung vereinfacht sind.

Erfindungsgemäß wird diese Aufgabe mit einer Anordnung mit den Merkmalen des Patentanspruches 1 gelöst.

Die erfindungsgemäße Anordnung mit einem Hydraulikfluidtank eines Strahltriebwerks und einer daran angeordneten Baueinheit ist mit wenigstens einer Auslasseinrichtung zur Abführung von Hydraulikfluid aus dem Hydraulikfluidtank ausgeführt. Die Auslasseinrichtung weist eine dem Hydraulikfluidtank zugewandte Auslassöffnung auf. Des Weiteren ist die Baueinheit mit wenigstens einer Messeinrichtung ausgeführt, wobei mittels der Messeinrichtung ein Füllstand eines in einem Hydraulikfluidtank befindlichen Hydraulikfluids ermittelbar ist. Zur Festlegung der Baueinheit an dem Hydraulikfluidtank ist eine Befestigungseinrichtung vorgesehen.

Die Auslasseinrichtung ist mit der Auslassöffnung als Überlaufschutz für den Hydraulikfluidtank entsprechend einem maximalen Füllstand des Hydraulikfluidtanks positioniert. Dabei sind die Positionierung der Auslassöffnung und ein von der Sensoreinrichtung ermittelter Füllstand in dem Hydraulikfluidtank kalibriert, um einerseits zu verhindern, dass bereits Öl über die Auslassöffnung aus dem Hydraulikfluidtank abgeführt wird, bevor durch die Sensoreinrichtung ein gewünschter Füllstand als erreicht erkannt wird, und anderseits durch den Überlaufschutz eine maximale Ölmenge in dem Hydraulikfluidtank lediglich knapp oberhalb des gewünschten Füllstands liegt.

Die erfindungsgemäße Baueinheit hat den Vorteil, dass durch die gemeinsame Anordnung sowohl der Auslassöffnung der Auslasseinrichtung als auch der wenigstens einen Messeinrichtung innerhalb der Baueinheit eine Kalibrierung bzw. Positionierung der Auslassöffnung und der wenigstens einen Messeinrichtung bereits vor einer Montage an einem Hydraulikfluidtank beispielsweise an einem Messstand durchgeführt werden kann und die kalibrierte Baueinheit anschließend an einem Hydraulikfluidtank montierbar ist. Eine Kalibrierung bzw. Positionierung der Auslassöffnung und der wenigstens einen Messeinrichtung nach einer Montage der Baueinheit an einem Hydraulikfluidtank kann hierdurch entfallen oder vereinfacht durchgeführt werden.

Weiterhin sind die Auslassöffnung und die wenigstens eine Messeinrichtung durch die erfindungsgemäße integrale Ausführung innerhalb einer Baueinheit gegenüber bekannten Ausführungen, bei denen die Auslassöffnung und die Messeinrichtung separat an einem Hydraulikfluidtank angeordnet sind, sehr nah aneinander anordenbar, so dass auch bei einer gegenüber einer horizontalen Ausrichtung geneigten Position eines mit der erfindungsgemäßen Baueinheit versehenen Hydraulikfluidtanks ein Hydraulikfluidstand in dem Hydraulikfluidtank genau ermittelbar bzw. einstellbar ist. Hierdurch können auf vorteilhafte Weise enge Toleranzen hinsichtlich des zu erzielenden Hydraulikfluidstandes in dem Hydraulikfluidtank auf einfache Weise eingehalten werden. Zudem ist die Gefahr des Auftretens einer Ölleckage reduziert.

Ein weiterer Vorteil der erfindungsgemäß ausgeführten Baueinheit besteht darin, dass die Auslassöffnung und die wenigstens eine Messeinrichtung über die Befestigungseinrichtung gemeinsam in einem einzigen Arbeitsschritt an einem Hydraulikfluidtank anordenbar sind. Eine Montagezeit und Montagekosten sind somit gegenüber einer bekannten Ausführung reduziert, bei der eine Auslassöffnung und eine Messeinrichtung unabhängig voneinander an einem Hydraulikfluidtank anzuordnen sind. Weiterhin ist auch ein Austausch der Baueinheit sehr einfach durchführbar.

Zudem kann ein Hydraulikfluidtank, mit dem die Baueinheit in Wirkverbindung gebracht werden soll, gegenüber bekannten Lösungen vereinfacht ausgeführt werden, da lediglich eine einzige Schnittstelle zur Anordnung der Auslassöffnung und der wenigstens einen Messeinrichtung zur Verfügung gestellt werden muss. Entsprechend ist ein derartiger Hydraulikfluidtank leichter und günstiger als bekannte Hydraulikfluidtanks ausführbar.

Bei einer vorteilhaften Ausführung der erfindungsgemäßen Baueinheit ist wenigstens eine Einlasseinrichtung vorgesehen, über die bei an einem Hydraulikfluidtank angeordneter Baueinheit dem Hydraulikfluidtank Hydraulikfluid zuführbar ist. Durch die integrale Ausführung der wenigstens einen Einlasseinrichtung mit der Baueinheit ist die wenigstens eine Einlasseinrichtung gemeinsam mit der Baueinheit an einem Hydraulikfluidtank montierbar und eine separate Schnittstelle für die wenigstens eine Einlasseinrichtung kann entfallen.

Bei einer vorteilhaften Ausführung der Erfindung ist eine Einlassventileinrichtung vorgesehen, wobei dem Hydraulikfluidtank über die Einlasseinrichtung in geöffnetem Betriebszustand der Einlassventileinrichtung auf konstruktiv einfache Weise betriebszustandsabhängig Hydraulikfluid zuführbar ist.

Wenn die Einlassventileinrichtung eine Federeinrichtung aufweist, die die Einlassventileinrichtung in Richtung eines geschlossenen Betriebszustands mit einer Federkraft beaufschlagt, ist ein Hydraulikfluidtank bei montierter Baueinheit beispielsweise über eine Pumpeneinrichtung automatisiert mit Hydraulikfluid befüllbar, wobei die Einlassventileinrichtung in einen offenen Betriebszustand überführt wird, wenn ein Zuführdruck des Hydraulikfluids eine die Federkraft übersteigende Kraft aufbringt. Dagegen ist die Einlassventileinrichtung ansonsten mittels der Federeinrichtung sicher in der geschlossenen Position gehalten, so dass sicher verhindert ist, dass über die Einlasseinrichtung Hydraulikfluid aus dem Hydraulikfluidtank abgeführt wird.

Bei einer vorteilhaften Ausführung einer erfindungsgemäßen Baueinheit weist die Auslasseinrichtung wenigstens eine Auslassventileinrichtung auf, wobei die Auslasseinrichtung mittels der Auslassventileinrichtung auf konstruktiv einfache Weise betriebszustandsabhängig zwischen einem offenen Betriebszustand und einem geschlossenen Betriebszustand überführbar ist.

Um eine Überfüllung eines Hydraulikfluidtanks bei montierter Baueinheit auf konstruktiv einfache Weise verhindern zu können, kann die insbesondere als Überlaufventil ausgeführte Auslassventileinrichtung über eine Koppeleinrichtung mit der Einlassventileinrichtung verbunden sein, wobei die Auslassventileinrichtung bei einer Überführung der Einlassventileinrichtung in einen offenen Betriebszustand von der Koppeleinrichtung in einen offenen Betriebszustand überführbar ist. Es kann dabei vorgesehen sein, dass über die Koppeleinrichtung eine mechanische Kopplung der Auslassventileinrichtung mit der Einlassventileinrichtung geschaffen ist. Alternativ hierzu kann es auch vorgesehen sein, dass die Koppeleinrichtung zur Ansteuerung der Auslassventileinrichtung derart ausgeführt ist, dass die Auslassventileinrichtung bei einer Öffnungsbewegung der Einlassventileinrichtung ebenfalls in einen offenen Betriebszustand überführt wird.

Bei einer vorteilhaften Ausführung einer erfindungsgemäßen Baueinheit ist eine weitere mit einer Federeinrichtung ausgeführte Auslassventileinrichtung vorgesehen, wobei die Federeinrichtung die weitere Auslassventileinrichtung in Richtung eines geschlossenen Betriebszustands mit einer Federkraft beaufschlagt. Durch die weitere Auslassventileinrichtung ist auf konstruktiv einfache Weise ein Überdruckschutz geschaffen, so dass mittels der weiteren Auslassventileinrichtung bei an einen Hydraulikfluidtank montierter Baueinheit eine Beschädigung des Hydraulikfluidtanks sicher verhindert ist. Die weitere Auslassventileinrichtung ist dabei insbesondere mit der Auslasseinrichtung verbunden, so dass in offenem Betriebszustand der weiteren Auslassventileinrichtung Hydraulikfluid über einen gemeinsamen Ablauf aus dem Hydraulikfluidtank abführbar ist.

Die weitere Auslassventileinrichtung kann über eine weitere Koppeleinrichtung mit der Einlassventileinrichtung und/oder der Auslassventileinrichtung verbunden sein, wobei die weitere Auslassventileinrichtung bei einer Überführung der Einlassventileinrichtung und/oder der Auslassventileinrichtung in einen offenen Betriebszustand von der weiteren Koppeleinrichtung in einen offenen Betriebszustand überführbar ist, wobei die weitere Auslassventileinrichtung in geschlossenem Betriebszustand der Einlassventileinrichtung und/oder der Auslassventileinrichtung in einen offenen Betriebszustand überführbar ist. Hierdurch ist auf konstruktiv einfache Weise erreicht, dass der Überdruckschutz durch die weitere Auslassventileinrichtung lediglich bei geschlossener Einlassventileinrichtung und/oder geschlossener Auslassventileinrichtung bereitgestellt ist.

Um bei an einem Hydraulikfluidtank montierter Baueinheit und sich auf einem Flugplatz befindlichem Flugzeug auf einfache Weise eine manuelle Befüllung des Hydraulikfluidtanks vornehmen zu können, kann die Baueinheit eine weitere Einlasseinrichtung aufweisen, über welche in montiertem Zustand der Baueinheit der Hydraulikfluidtank befüllbar ist. Eine Kalibrierung der weiteren Einlasseinrichtung bezüglich der weiteren Elemente der Baueinheit kann hierbei vorteilhafterweise bereits vor einer Montage der Baueinheit an einem Hydraulikfluidtank durchgeführt werden. Die weitere Einlasseinrichtung ist bei montierter Baueinheit vorzugsweise bezüglich einer Hochrichtung derart positioniert, dass eine Befüllung des Hydraulikfluidtanks über einen maximal zulässigen Füllstand mittels der weiteren Einlasseinrichtung sicher verhindert ist. Vorzugsweise ist die weitere Einlasseinrichtung in unmittelbarer Nähe zu einer Messeinrichtung angeordnet, so dass auf einfache Weise während einer Befüllung des Hydraulikfluidtanks ein aktueller Füllstand von Hydraulikfluid in dem Hydraulikfluidtank ermittelt werden kann.

Bei einer vorteilhaften Ausführung einer erfindungsgemäßen Baueinheit ist eine Messeinrichtung als Sichteinrichtung ausgeführt, mittels der ein Füllstand eines in dem Hydraulikfluidtank befindlichen Hydraulikfluids visuell ermittelbar ist. Die Sichteinrichtung ist insbesondere an einer bei einer Instandhaltung leicht zugänglichen Position angeordnet und kann ein transparentes Element aufweisen, über das bei mit einem Hydraulikfluidtank verbundener Baueinheit ein Füllstand eines in dem Hydraulikfluidtank befindlichen Hydraulikfluids insbesondere von einer Bedienperson direkt visuell ermittelbar ist. Eine als Schauglas ausgeführte Sichteinrichtung weist hierzu insbesondere zwei zueinander versetzte, bei mit einem Hydraulikfluidtank verbundener Baueinheit einem Innenraum des Hydraulikfluidtanks zugewandte Öffnungen auf. Die Öffnungen sind im Bereich der Befestigungseinrichtung über eine insbesondere rohrförmige Ausnehmung miteinander verbunden, so dass Hydraulikfluid von einer Öffnung zu der anderen Öffnung strömen kann. In mit einem Hydraulikfluidtank verbundenem Zustand der Baueinheit kann ein Hydraulikfluid nach dem Prinzip miteinander kommunizierender Gefäße durch die rohrförmige Ausnehmung strömen. Über das transparente bzw. durchsichtige Element, das insbesondere mit Kunststoff oder Glas ausgebildet ist und auf einer einem Innenraum des Hydraulikfluidtanks abgewandten Seite der rohrförmigen Ausnehmung angeordnet ist, ist ein Füllstand des Hydraulikfluids auf einfache Art und Weise ermittelbar. Alternativ hierzu kann die Sichteinrichtung auch als sogenanntes Ölauge ausgeführt sein, über das insbesondere eine Bedienperson bei mit einem Hydraulikfluidtank verbundener Baueinheit direkt in einen Innenraum eines Hydraulikfluidtanks blicken und einen Füllstand des Hydraulikfluids ermitteln kann.

Eine Messeinrichtung ist bei einer vorteilhaften Ausführung der erfindungsgemäßen Baueinheit als Sensoreinrichtung bzw. als elektrische Füllstandsmesseinrichtung ausgeführt, über die bei an einem Hydraulikfluidtank montierter Baueinheit ein Füllstand des Hydraulikfluids in dem Hydraulikfluid insbesondere automatisiert ermittelbar ist.

Die Sensoreinrichtung der erfindungsgemäßen Baueinheit kann sowohl gelenkig als auch starr mit der Befestigungseinrichtung verbunden sein, so dass die Sensoreinrichtung je nach vorliegendem Anwendungsfall und gewünschtem Funktionsprinzip auf einfache Weise mit der Baueinheit an einem Hydraulikfluidtank angeordnet werden und eine gewünschte Position bei an einem Hydraulikfluidtank angeordneter Baueinheit einnehmen kann.

Wenn die Baueinheit sowohl eine Sichteinrichtung als auch eine Sensoreinrichtung aufweist, über die bei an einem Hydraulikfluidtank angeordneter Baueinheit unabhängig voneinander ein Füllstand eines in einem Hydraulikfluidtank befindlichen Hydraulikfluids ermittelbar ist, können diese besonders nah zueinander angeordnet werden, so dass eine Schiefstellung eines Hydraulikfluidtanks zu keinen oder nur geringen Abweichungen zwischen den über die Sichteinrichtung und über die Sensoreinrichtungen ermittelten Füllständen führt. Weiterhin ist eine gemeinsame Kalibrierung der Sichteinrichtung und der Sensoreinrichtung bereits vor einer Montage der Baueinheit an einem Hydraulikfluidtank auf einfache Weise durchführbar.

Bei einer vorteilhaften Ausführung der erfindungsgemäßen Baueinheit ist es vorgesehen, dass die Sensoreinrichtung zur Ermittlung des Füllstands des Hydraulikfluids als induktiv, kapazitiv, magnetisch oder dergleichen messende Sensoreinrichtung ausgeführt ist.

Wenn eine Längsachse der beispielsweise zylinder- oder röhrenförmig ausgeführten Sensoreinrichtung einen Winkel, vorzugsweise einen spitzen Winkel, mit einer bei an einem Hydraulikfluidtank angeordneter Baueinheit einem Innenraum des Hydraulikfluidtanks abgewandten Außenfläche oder einer dem Innenraum des Hydraulikfluidtanks zugewandten Innenfläche der Befestigungseinrichtung einschließt, kann die Sensoreinrichtung bei entsprechender Auslegung des Winkels während einer Montage der Baueinheit an einem Hydraulikfluidtank auf einfache Weise durch eine Ausnehmung des Hydraulikfluidtanks geführt werden und zusätzlich an räumliche Gegebenheiten im Bereich des Hydraulikfluidtanks angepasst werden. Zudem kann hierdurch auf einfache Weise eine Zugänglichkeit des Schauglases in gewünschtem Umfang sichergestellt werden.

Bei einer einfachen Ausführung der erfindungsgemäßen Baueinheit ist die Befestigungseinrichtung als Flansch ausgeführt.

Die Elemente der Baueinheit bzw. die gesamte Baueinheit ist bzw. sind bei einer vorteilhaften Ausführung der erfindungsgemäßen Baueinheit in Abhängigkeit des jeweils vorliegenden Anwendungsfalles zumindest bereichsweise mit einem feuerfesten Material ausgeführt.

Die erfindungsgemäße Baueinheit kann auf einfache Weise mittels eines 3D-Druckers hergestellt sein.

Sowohl die in den Patentansprüchen angegebenen Merkmale als auch die in den nachfolgenden Ausführungsbeispielen der erfindungsgemäßen Baueinheit angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen der erfindungsgemäßen Baueinheit ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines Flugtriebwerks mit einer im Bläsergehäuse angeordneten Hilfsgerätegetriebeeinrichtung, wobei der Hilfsgerätegetriebeeinrichtung ein Öltank zugeordnet ist;
- Fig. 2: eine vereinfachte dreidimensionale Darstellung einer ersten Ausführungsform einer Baueinheit, die an dem Öltank gemäß Fig. 1 angeordnet ist;
- Fig. 3: eine vereinfachte dreidimensionale Darstellung der Baueinheit gemäß Fig. 2 aus einer anderen Perspektive;
- Fig. 4: eine vereinfachte dreidimensionale Darstellung einer zweiten Ausführungsform einer Baueinheit, die an dem Öltank gemäß Fig. 1 anordenbar ist; und
- Fig. 5: eine vereinfachte dreidimensionale Darstellung der Baueinheit gemäß Fig. 4 aus einer anderen Perspektive.

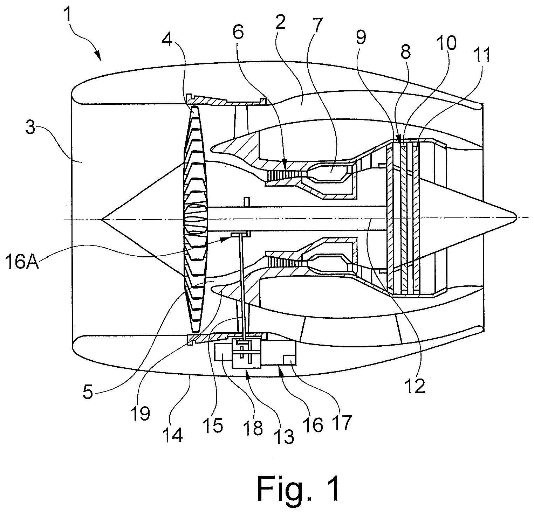

In Fig. 1 ist ein Flugtriebwerk bzw. Strahltriebwerk 1 in einer Längsschnittansicht gezeigt. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 bzw. Kernstromkanal strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche mit im Wesentlichen vergleichbarer Bauweise ausgebildet sind und mit einer Triebwerksachse 12 verbunden sind.

Bei der Ausführung des Strahltriebwerks 1 gemäß Fig. 1 ist eine Hilfsgerätegetriebeeinrichtung 13 bzw. Nebenaggregategetriebeeinrichtung in einem äußeren Triebwerksgehäuse 14 angeordnet, das den Nebenstromkanal 2 radial außenseitig begrenzt und den äußeren Umfangsbereich des Strahltriebwerkes 1 darstellt. Die Hilfsgerätegetriebeeinrichtung 13 ist vorliegend über eine in radialer Richtung des Strahltriebwerks 1 verlaufende Antriebswelle 15 über ein inneres Getriebe 16A mit der Triebwerksachse 12 verbunden und wird somit von der Triebwerksachse 12 im Betrieb des Strahltriebwerks 1 angetrieben bzw. mit Drehmoment versorgt. Von der Hilfsgerätegetriebeeinrichtung 13 werden verschiedene Nebenaggregate 16 und ein Ölabscheider 17, der auch als Breather bezeichnet wird, in gewünschtem Umfang mit Drehmoment beaufschlagt. Zusätzlich ist im Bereich der Hilfsgerätegetriebeeinrichtung 13 auch ein als Öltank 18 ausgeführter Hydraulikfluidtank vorgesehen, der ein Hydraulikfluidreservoir darstellt, aus dem Öl zur Kühlung und Schmierung verschiedener Bereiche des Strahltriebwerks 1, wie Lagereinrichtungen, Zahnradpaarungen des inneren Getriebes 16A und der Hilfsgerätegetriebeeinrichtung 13 sowie weiterer zu kühlender und zu schmierender Baugruppen des Strahltriebwerkes 1, entnommen wird.

Alternativ hierzu kann die Hilfsgerätegetriebeeinrichtung 13 mit den Nebenaggregaten 16, dem Ölabscheider 17 und dem Öltank 18 auch in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet sein.

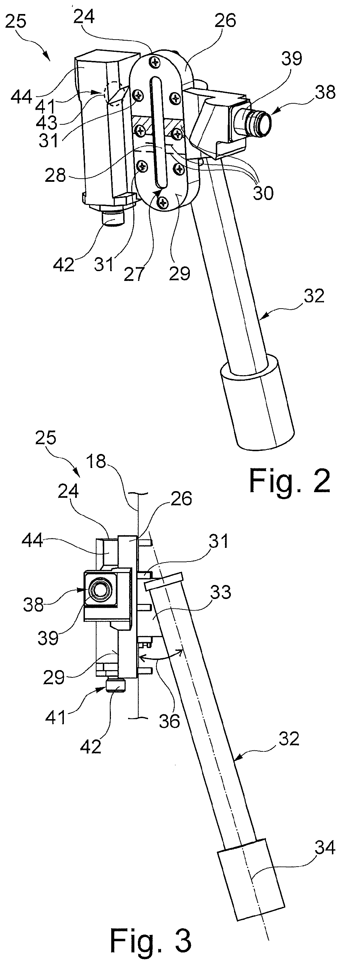

In Fig. 2 und Fig. 3 ist eine erste Ausführungsform einer mit einem Gehäuse 24 ausgeführten Baueinheit 25 gezeigt, die an dem in Fig. 3 nur ausschnittsweise ersichtlichen und stark vereinfacht gezeigten Öltank 18 anordenbar ist. Die Baueinheit 25 ist im Bereich einer Ausnehmung des Öltanks 18 an den Öltank 18 angebunden, wobei die Baueinheit 25 bzw. das Gehäuse 24 hierzu eine als Flansch 26 ausgeführte Befestigungseinrichtung aufweist. Im Bereich des Flanschs 26 ist die Baueinheit 25 über mehrere Bolzen bzw. Schrauben 31 auf einfache Weise an einer Wand des Öltanks 18 befestigbar.

Die Baueinheit 25 weist eine als Sichteinrichtung mit einem Schauglas 27 ausgeführte Messeinrichtung auf, wobei eine Bedienperson über das Schauglas 27 einen Füllstand eines in einem Innenraum des Öltanks 18 vorhandenen Hydraulikfluids bzw. Öls ablesen kann. Das Schauglas 27 ist hierzu mit einem transparenten Element 28 ausgeführt und zudem aus feuerfestem Material hergestellt.

Um den Füllstand des Öltanks 1 besonders einfach ermitteln zu können, sind im Bereich einer dem Innenraum des Öltanks 18 abgewandten Außenfläche 29 des Flansches 26 neben dem transparenten Element 28 des Schauglases 27 Markierungen 30 vorgesehen, über die ein Füllstand des Öls einfach von einer Bedienperson ablesbar ist.

Neben dem Schauglas 27 weist die Baueinheit 25 eine als Sensoreinrichtung 32 ausgeführte elektrische Messeinrichtung auf, die beispielsweise mit einem Schwimmer oder dergleichen ausgebildet ist und zur vorzugsweise automatisierten Messung eines Füllstandes des Öltanks 18 vorgesehen ist. Über die hier zumindest bereichsweise rohr- bzw. zylinderförmig ausgeführte Sensoreinrichtung 32, beispielsweise ein sogenannter Transducer, ist ein Füllstand des Öltanks 18 beispielsweise mittels eines induktiven, eines kapazitiven oder eines magnetischen Messprinzip bestimmbar. Die Sensoreinrichtung 32 ist vorliegend starr über ein Verbindungsblech 33 an das Gehäuse 24 der Baueinheit 25 angebunden.

Eine Mittelachse 34 der rohrförmig ausgeführten Sensoreinrichtung 32 schließt vorliegend einen spitzen Winkel 36 mit einer dem Innenraum des Öltanks 18 zugewandten Innenfläche 35 bzw. der parallel hierzu verlaufenden und dem Innenraum des Öltanks 18 abgewandten Außenfläche 29 ein.

Das Schauglas 27 ist gegenüber dem Flansch 26 jeweils derart geneigt anordenbar, dass die Sensoreinrichtung 32 auf einfache Weise durch die Ausnehmung des Öltanks 18 in den Innenraum des Öltanks 18 eingeführt werden kann, wobei die Sensoreinrichtung 32 an den in montiertem Zustand für die Sensoreinrichtung 32 zur Verfügung stehenden Bauraum angepasst ausgeführt und positionierbar ist.

Die Baueinheit 25 weist weiterhin eine Einlasseinrichtung 38 mit einer dem Öltank 18 zugewandten Einlassöffnung und einem Einlassstutzen 39 auf, wobei dem Öltank 18 beispielsweise über eine Pumpeneinrichtung bei einer cockpitseitigen Anforderung aus einem weiteren einem mit dem Strahltriebwerk 1 ausgeführten Flugzeug zugeordneten Öltank Öl zuführbar ist. In Abhängigkeit von einem von der Sensoreinrichtung 32 ermittelten Füllstand wird der Öltank 18 bis zu einem gewünschten Ölstand automatisiert mit Öl aus dem weiteren Öltank befüllt.

Zur Abführung von Öl aus dem Öltank 18 weist die Baueinheit 25 eine Auslasseinrichtung 41 auf, die eine dem Innenraum des Öltanks 18 zugewandte, strichliert gezeigte Auslassöffnung 43 und einen Auslassstutzen 42 auf einer dem Innenraum abgewandten Seite der Baueinheit 25 aufweist, wobei der Auslassstutzen 42 zur Anbindung einer Ölabführeinrichtung beispielsweise in Form eines Drainagerohrs vorgesehen ist.

Zwischen dem Einlassstutzen 39 und der Einlassöffnung der Einlasseinrichtung 38 und zwischen der Auslassöffnung 43 und dem Auslassstutzen 42 der Auslasseinrichtung 41 ist vorliegend eine integrierte Ventileinrichtung 44 angeordnet, die hier mit einer Einlassventileinrichtung, einer Auslassventileinrichtung und einer weiteren Auslassventileinrichtung ausgeführt ist.

Die Einlassventileinrichtung weist eine Federeinrichtung auf, die die Einlassventileinrichtung in der geschlossenen Position hält, in der Öl nicht von dem Einlassstutzen 39 in Richtung der Einlassöffnung strömen kann. Wird beispielsweise bei einer Inspektion festgestellt, dass ein Ölstand in dem Öltank 18 unerwünscht niedrig ist und dem Öltank 18 Öl zugeführt werden soll, wird über die Pumpeneinrichtung Öl von dem weiteren Öltank in Richtung des Einlassstutzens 39 der Einlasseinrichtung 38 gefördert. Sobald eine durch den hierbei auftretenden Druck wirkende Kraft die Federkraft der Federeinrichtung übersteigt, wird die Einlassventileinrichtung in einen offenen Betriebszustand überführt und Öl wird von dem weiteren Öltank über den Einlassstutzen 39 und die Einlassöffnung dem Öltank 18 zugeführt.

Um zu verhindern, dass dem Öltank 18 eine unerwünscht große Ölmenge zugeführt wird und ein maximaler Ölfüllstand überschritten wird, ist die Auslasseinrichtung 41 vorgesehen, die einen Überlaufschutz darstellt. In geöffnetem Betriebszustand der Auslassventileinrichtung kann Öl über die Auslassöffnung 43 und den Auslassstutzen 42 aus dem Öltank 18 abgeführt werden. In geschlossenem Betriebszustand der Auslassventileinrichtung verhindert die Auslassventileinrichtung dagegen ein Ausströmen von Öl aus dem Öltank 18.

Die Auslassventileinrichtung ist vorliegend mechanisch über eine Koppeleinrichtung mit der Einlassventileinrichtung verbunden, so dass ein Betriebszustand der Auslassventileinrichtung einem Betriebszustand der Einlassventileinrichtung entspricht und die Auslassventileinrichtung in einen offenen Betriebszustand aufweist, wenn die Einlassventileinrichtung sich in einem offenen Betriebszustand , befindet und einen geschlossenen Betriebszustand aufweist, wenn die Einlassventileinrichtung sich in einem geschlossenen Betriebszustand befindet. In einem Betriebszustand, in dem an dem Einlassstutzen 39 kein Druck anliegt oder eine von einem anliegenden Druck auf die Einlassventileinrichtung wirkende Kraft die Federkraft der Federeinrichtung unterschreitet, kann somit Öl von dem Öltank 18 nicht über die Auslasseinrichtung 41 abgeführt werden und der Öltank 18 ist im Bereich der Baueinheit 25 sicher verschlossen.

Die Auslassöffnung 43 ist bei montierter Baueinheit 25 in Hochrichtung geringfügig oberhalb eines bei einer Befüllung zu erzielenden Ölfüllstands in dem Öltank 18 angeordnet, so dass gegebenenfalls bereits kurz nach einem Überschreiten dieses Ölfüllstands Öl über die Auslasseinrichtung 41 aus dem Öltank 18 abgeführt wird und eine Überfüllung des Öltanks 18 sicher verhindert ist. Eine Positionierung der Auslassöffnung 43 und ein von der Sensoreinrichtung 32 und/oder dem Schauglas 27 ermittelter Füllstand in dem Öltank 18 sind dabei exakt einzustellen bzw. zu kalibrieren, um zu verhindern, dass einerseits beispielsweise bei durch die Sensoreinrichtung 32 noch nicht erreichtem gewünschten Füllstand bereits Öl über die Auslassöffnung 43 aus dem Öltank 18 abgeführt wird und andererseits durch den Überlaufschutz eine maximale Ölmenge in dem Öltank 18 lediglich knapp oberhalb des gewünschten Füllstands liegt.

Bei einem Triebwerksstart wird dem Öltank 18 über eine weitere, beispielsweise der Hilfsgerätegetriebeeinrichtung 13 zugeordnete Pumpeneinrichtung sich im Bereich von Lagerkammern befindliches Öl in Richtung des Öltanks 18 gefördert. Da die Auslassventileinrichtung während eines Betriebs des Strahltriebwerks 1 geschlossen ist, kann ein Druck in dem Öltank 18 durch eine Befüllung des Öltanks 18 über diese Pumpeneinrichtung unerwünscht groß werden. Um das Übersteigen eines definierten Druckgrenzwerts zu verhindern, ist die weitere Auslassventileinrichtung der Ventileinrichtung 44 vorliegend als Überdruckventil mit einer Federeinrichtung ausgeführt. Die Federeinrichtung beaufschlagt die weitere Auslassventileinrichtung mit einer in Richtung eines geschlossenen Betriebszustandes wirkenden Kraft. Übersteigt eine durch einen Druck in dem Öltank 18 auf die weitere Auslassventileinrichtung wirkende Kraft die Federkraft der Federeinrichtung, wird die weitere Auslassventileinrichtung in einen offenen Betriebszustand überführt, in dem eine dem Innenraum des Öltanks 18 zugeordnete Auslassöffnung, die mit der Auslassöffnung 43 der Auslassventileinrichtung identisch sein kann, mit dem Auslassstutzen 42 verbunden ist und Öl über die Auslasseinrichtung 39 aus dem Öltank 18 abführbar ist.

Es kann dabei vorgesehen sein, dass die weitere Auslassventileinrichtung über eine Koppeleinrichtung mit der Auslassventileinrichtung verbunden ist, wobei die weitere Auslassventileinrichtung über die Koppeleinrichtung in einen offenen Betriebszustand überführt wird, wenn sich die Auslassventileinrichtung in einem offenen Betriebszustand befindet. Bei geschlossener Auslassventileinrichtung ist die weitere Auslassventileinrichtung über die Federeinrichtung in einen offenen Betriebszustand überführbar.

Bei einer alternativen Ausführung der Erfindung kann die Einlasseinrichtung auch mit der weiteren, im Bereich der Hilfsgerätegetriebeeinrichtung 13 angeordneten Pumpeneinrichtung verbunden sein, so dass sich in einem Betriebszustand, in dem von der weiteren Pumpeneinrichtung Öl in den Öltank 18 gefördert wird, die Auslassventileinrichtung durch die Kopplung an die Einlassventileinrichtung in einem offenen Betriebszustand befindet. Auf eine weitere als Überdruckventil ausgeführte Auslassventileinrichtung kann bei einer derartigen Ausführung der Baueinheit gegebenenfalls verzichtet werden.

Das Schauglas 27, die Sensoreinrichtung 32 und die Auslassöffnungen 43 sind bei der erfindungsgemäßen Baueinheit 25 sehr nah aneinander anordenbar, so dass eine Neigung des Öltanks 18 keine oder nur geringfügige Auswirkungen auf die Funktionalität der Baugruppe 25 hat. Die Baueinheit 25 ist weiterhin vorteilhafterweise vormontierbar, so dass eine Kalibrierung der Baueinheit 25 bereits vor einer Montage der Baueinheit 25 an dem Öltank 18 beispielsweise auf einem Prüfstand vorgenommen werden kann. Zudem ist die Baueinheit 25 mit einer einzigen Schnittstelle auf einfache und schnelle Weise an dem Öltank 18 montierbar, so dass neben der Einlasseinrichtung 38 und der Auslasseinrichtung 41 auch das Schauglas 27, die Sensoreinrichtung 32, die Auslassöffnungen 43 und die Ventileinrichtung 44 über den Flansch 26 in einem einzigen Arbeitsschritt an dem Öltank 1 festlegbar sind. Durch die Kombination der genannten Elemente in einer Baueinheit 25 können bei der Herstellung des Öltanks 18 vorliegende Toleranzen gut ausgeglichen werden.

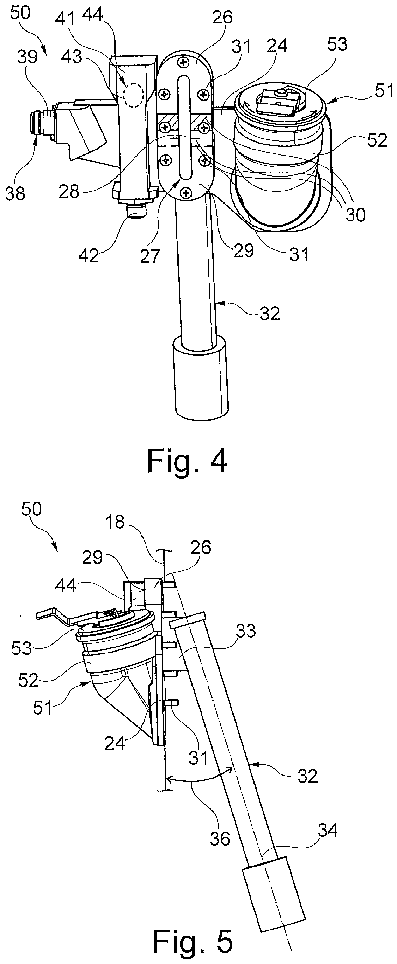

In Fig. 4 und Fig. 5 ist eine weitere Ausführungsform einer Baueinheit 50 gezeigt. Im Folgenden wird lediglich auf die Unterschiede der Baueinheit 50 gegenüber der Baueinheit 25 eingegangen, wobei ansonsten auf die Beschreibung zu der Baueinheit 25 verwiesen wird.

Die Baueinheit 50 weist eine weitere Einlasseinrichtung 51 auf, mittels der der Öltank 18 manuell befüllbar ist. Die weitere Einlasseinrichtung 51 weist hierzu einen mit einem Deckel 53 verschließbaren Tankstutzen 52 auf, der fest mit den weiteren Bauteilen der Baueinheit 50 verbunden ist. Der Tankstutzen 52 ist dabei bezüglich seiner Position in Hochrichtung des Öltanks 18 derart angeordnet, dass der Öltank 18 bei an dem Öltank 18 montierter Baueinheit 50 bis zu einem gewünschten maximalen Füllstand aber nicht darüber befüllbar ist.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Nebenaggregategetriebeeinrichtung
- 14: Triebwerksgehäuse
- 15: Antriebswelle
- 16: Nebenaggregate
- 16A: inneres Getriebe
- 17: Ölabscheider
- 18: Öltank
- 19: Bauteil
- 24: Gehäuse
- 25: Baueinheit
- 26: Befestigungseinrichtung; Flansch
- 27: Messeinrichtung; Schauglas
- 28: transparentes Element
- 29: Fläche
- 30: Markierungen
- 31: Schrauben
- 32: Messeinrichtung; Sensoreinrichtung
- 33: Verbindungsblech
- 34: Mittelachse
- 35: Innenfläche
- 36: Winkel
- 38: Einlasseinrichtung
- 39: Einlassstutzen
- 41: Auslasseinrichtung
- 42: Auslassstutzen
- 43: Auslassöffnung
- 44: Ventileinrichtung
- 50: Baueinheit
- 51: weitere Einlasseinrichtung
- 52: Tankstutzen
- 53: Deckel

## Patentansprüche

1. Anordnung mit einem Hydraulikfluidtank (18) eines Strahltriebwerks (1) und einer daran angeordneten Baueinheit (25; 50) mit wenigstens einer Auslasseinrichtung (41) zur Abführung von Hydraulikfluid aus dem Hydrauliktank (18), wobei die Auslasseinrichtung (41) hierfür eine dem Hydraulikfluidtank (18) zugewandte Auslassöffnung (43) aufweist, und die Baueinheit (25; 50) wenigstens eine Messeinrichtung (27, 32), mit der ein Füllstand eines in einem Hydraulikfluidtank (18) befindlichen Hydraulikfluids ermittelbar ist, aufweist, und wobei zur Festlegung der Baueinheit (25; 50) am Hydraulikfluidtank (18) eine Befestigungseinrichtung (26) vorgesehen ist
**dadurch gekennzeichnet, dass**
die Auslasseinrichtung (41) mit der Auslassöffnung (43) als Überlaufschutz für den Hydraulikfluidtank (18) entsprechend einem maximalen Füllstand des Hydraulikfluidtanks (18) positioniert ist,
wobei die Positionierung der Auslassöffnung (43) und ein von der Messeinrichtung (32) ermittelter Füllstand in dem Öltank kalibriert sind, um einerseits zu verhindern, dass bereits Öl über die Auslassöffnung (43) aus dem Hydraulikfluidtank (18) abgeführt wird, bevor durch die Messeinrichtung (32) ein gewünschter Füllstand als erreicht erkannt wird, und anderseits durch den Überlaufschutz eine maximale Ölmenge in dem Hydraulikfluidtank (18) lediglich knapp oberhalb des gewünschten Füllstands liegt.

2. Anordnung nach Anspruch 1, **dadurch gekennzeichnet, dass** wenigstens eine Einlasseinrichtung (38) vorgesehen ist, über die dem Hydraulikfluidtank (18) Hydraulikfluid zuführbar ist.

3. Anordnung nach Anspruch 2, **dadurch gekennzeichnet, dass** eine Einlassventileinrichtung (44) vorgesehen ist, wobei dem Hydraulikfluidtank (18) über die Einlasseinrichtung (38) in geöffnetem Betriebszustand der Einlassventileinrichtung (44) Hydraulikfluid zuführbar ist.

4. Anordnung nach Anspruch 3, **dadurch gekennzeichnet, dass** die Einlassventileinrichtung (44) eine Federeinrichtung aufweist, die die Einlassventileinrichtung (44) in Richtung eines geschlossenen Betriebszustands mit einer Federkraft beaufschlagt.

5. Anordnung nach einem der Ansprüche 1 bis 4, **dadurch gekennzeichnet, dass** die Auslasseinrichtung (41) wenigstens eine Auslassventileinrichtung (44) aufweist.

6. Anordnung nach Anspruch 5, **dadurch gekennzeichnet, dass** die Auslassventileinrichtung (44) über eine Koppeleinrichtung mit der Einlassventileinrichtung (44) verbunden ist, wobei die Auslassventileinrichtung (44) bei einer Überführung der Einlassventileinrichtung (44) in einen offenen Betriebszustand von der Koppeleinrichtung in einen offenen Betriebszustand überführbar ist.

7. Anordnung nach einem der Ansprüche 1 bis 6, **dadurch gekennzeichnet, dass** eine weitere mit einer weiteren Federeinrichtung ausgeführte Auslassventileinrichtung (44) vorgesehen ist, wobei die weitere Federeinrichtung die weitere Auslassventileinrichtung (44) in Richtung eines geschlossenen Betriebszustands mit einer Federkraft beaufschlagt.

8. Anordnung nach Anspruch 7, **dadurch gekennzeichnet, dass** die weitere Auslassventileinrichtung (44) über eine weitere Koppeleinrichtung mit der Einlassventileinrichtung (44) und/oder der Auslassventileinrichtung (44) verbunden ist, wobei die weitere Auslassventileinrichtung (44) bei einer Überführung der Einlassventileinrichtung (44) und/oder der Auslassventileinrichtung (44) in einen offenen Betriebszustand von der weiteren Koppeleinrichtung in einen offenen Betriebszustand überführbar ist.

9. Anordnung nach einem der Ansprüche 1 bis 8, **dadurch gekennzeichnet, dass** eine weitere Einlasseinrichtung (51) vorgesehen ist, über welche in montiertem Zustand der Baueinheit (25; 50) ein Hydraulikfluidtank (18) befüllbar ist.

10. Anordnung nach einem der Ansprüche 1 bis 9, **dadurch gekennzeichnet, dass** eine Messeinrichtung (27) als Sichteinrichtung ausgeführt ist, mittels der ein Füllstand eines in dem Hydraulikfluidtank (18) befindlichen Hydraulikfluids visuell ermittelbar ist.

11. Anordnung nach einem der Ansprüche 1 bis 10, **dadurch gekennzeichnet, dass** eine Messeinrichtung (32) als Sensoreinrichtung ausgeführt ist.

12. Anordnung nach Anspruch 11, **dadurch gekennzeichnet**, die Sensoreinrichtung (32) zur Ermittlung des Füllstands des Hydraulikfluids als induktiv, kapazitiv oder magnetisch messende Sensoreinrichtung ausgeführt ist.

13. Anordnung nach einem der Ansprüche 11 oder 12, **dadurch gekennzeichnet, dass** eine Längsachse (34) der Sensoreinrichtung (32) einen Winkel (36) mit einer einem Innenraum des Hydraulikfluidtanks (18) abgewandten Außenfläche (29) oder einer dem Innenraum des Hydraulikfluidtanks (18) zugewandten Innenfläche (35) der Befestigungseinrichtung (26) einschließt.

## Claims

1. Arrangement having a hydraulic fluid tank (18) of a jet engine (1) and having a structural unit (25; 50) which is arranged on said hydraulic fluid tank and which has at least one outlet device (41) for removing hydraulic fluid from the hydraulic tank (18), wherein, for this purpose, the outlet device (41) has an outlet opening (43) which faces the hydraulic fluid tank (18),
and the structural unit (25; 50) has at least one measuring device (27, 32), by way of which a fill level of a hydraulic fluid situated in a hydraulic fluid tank (18) is able to be determined,
and wherein provision is made of a fastening device (26) for fixing the structural unit (25; 50) to the hydraulic fluid tank (18),
**characterized in that**
the outlet device (41) is, with the outlet opening (43), positioned as overflow protection for the hydraulic fluid tank (18) according to a maximum fill level of the hydraulic fluid tank (18),
wherein the positioning of the outlet opening (43) and a fill level, determined by the measuring device (32), in the oil tank are calibrated so as to prevent oil already being removed via the outlet opening (43) from the hydraulic fluid tank (18) before a desired fill level is identified as having been reached by the measuring device (32), on the one hand, and a maximum quantity of oil in the hydraulic fluid tank (18) being only just above the desired fill level due to the overflow protection, on the other hand.

2. Arrangement according to Claim 1, **characterized in that** provision is made of at least one inlet device (38), via which hydraulic fluid is able to be supplied to the hydraulic fluid tank (18).

3. Arrangement according to Claim 2, **characterized in that** provision is made of an inlet valve device (44), wherein, in an open operating state of the inlet valve device (44), hydraulic fluid is able to be supplied via the inlet device (38) to the hydraulic fluid tank (18).

4. Arrangement according to Claim 3, **characterized in that** the inlet valve device (44) has a spring device which acts with a spring force on the inlet valve device (44) in the direction of a closed operating state.

5. Arrangement according to one of Claims 1 to 4, **characterized in that** the outlet device (41) has at least one outlet valve device (44).

6. Arrangement according to Claim 5, **characterized in that** the outlet valve device (44) is connected via a coupling device to the inlet valve device (44), wherein, when the inlet valve device (44) is transferred into an open operating state, the outlet valve device (44) is able to be transferred into an open operating state by the coupling device.

7. Arrangement according to one of Claims 1 to 6, **characterized in that** provision is made of a further outlet valve device (44), which is designed with a further spring device, wherein the further spring device acts with a spring force on the further outlet valve device (44) in the direction of a closed operating state.

8. Arrangement according to Claim 7, **characterized in that** the further outlet valve device (44) is connected via a further coupling device to the inlet valve device (44) and/or to the outlet valve device (44), wherein, when the inlet valve device (44) and/or the outlet valve device (44) are/is transferred into an open operating state, the further outlet valve device (44) is able to be transferred into an open operating state by the further coupling device.

9. Arrangement according to one of Claims 1 to 8, **characterized in that** provision is made of a further inlet device (51), via which a hydraulic fluid tank (18) is able to be filled in an installed state of the structural unit (25; 50).

10. Arrangement according to one of Claims 1 to 9, **characterized in that** a measuring device (27) is designed as a viewing device by means of which a fill level of a hydraulic fluid situated in the hydraulic fluid tank (18) is able to be determined visually.

11. Arrangement according to one of Claims 1 to 10, **characterized in that** a measuring device (32) is designed as a sensor device.

12. Arrangement according to Claim 11, **characterized in that** the sensor device (32) for determining the fill level of the hydraulic fluid is designed as an inductively, capacitively or magnetically measuring sensor device.

13. Arrangement according to either of Claims 11 and 12, **characterized in that** a longitudinal axis (34) of the sensor device (32) includes an angle (36) with an outer surface (29), facing away from an interior of the hydraulic fluid tank (18), or an inner surface (35), facing the interior of the hydraulic fluid tank (18), of the fastening device (26).

## Revendications

1. Agencement comprenant un réservoir de fluide hydraulique (18) d'un turboréacteur (1) et une unité structurelle (25 ; 50) disposée sur celui-ci, avec au moins un dispositif de sortie (41) pour évacuer le fluide hydraulique hors du réservoir hydraulique (18), le dispositif de sortie (41) présentant à cet effet une ouverture de sortie (43) tournée vers le réservoir de fluide hydraulique (18), et l'unité structurelle (25 ; 50) présentant au moins un dispositif de mesure (27, 32) avec lequel un niveau de remplissage d'un fluide hydraulique se trouvant dans un réservoir de fluide hydraulique (18) peut être déterminé, et un dispositif de fixation (26) étant prévu pour fixer l'unité structurelle (25 ; 50) sur le réservoir de fluide hydraulique (18),
**caractérisé en ce que**
le dispositif de sortie (41) est positionné avec l'ouverture de sortie (43) en tant que protection contre le trop-plein pour le réservoir de fluide hydraulique (18) de manière correspondant à un niveau de remplissage maximal du réservoir de fluide hydraulique (18),
le positionnement de l'ouverture de sortie (43) et un niveau de remplissage déterminé par le dispositif de mesure (32) dans le réservoir d'huile étant étalonnés afin d'une part, d'empêcher que de l'huile ne soit déjà évacuée par le biais de l'ouverture de sortie (43) hors du réservoir de fluide hydraulique (18) avant qu'un niveau de remplissage souhaité n'ait été détecté comme étant atteint par le dispositif de mesure (32), et d'autre part, par la protection contre le trop-plein, qu'une quantité d'huile maximale dans le réservoir de fluide hydraulique (18) ne se situe seulement légèrement au-dessus du niveau de remplissage souhaité.

2. Agencement selon la revendication 1, **caractérisé en ce qu'**au moins un dispositif d'entrée (38) est prévu, par le biais duquel du fluide hydraulique peut être acheminé au réservoir de fluide hydraulique (18).

3. Agencement selon la revendication 2, **caractérisé en ce qu'**un dispositif de soupape d'entrée (44) est prévu, du fluide hydraulique pouvant être acheminé au réservoir de fluide hydraulique (18) par le biais du dispositif d'entrée (38) dans l'état de fonctionnement ouvert du dispositif de soupape d'entrée (44).

4. Agencement selon la revendication 3, **caractérisé en ce que** le dispositif de soupape d'entrée (44) présente un dispositif de ressort qui sollicite le dispositif de soupape d'entrée (44) avec une force de ressort dans la direction d'un état de fonctionnement fermé.

5. Agencement selon l'une quelconque des revendications 1 à 4, **caractérisé en ce que** le dispositif de sortie (41) présente au moins un dispositif de soupape de sortie (44).

6. Agencement selon la revendication 5, **caractérisé en ce que** le dispositif de soupape de sortie (44) est connecté par le biais d'un dispositif d'accouplement au dispositif de soupape d'entrée (44), le dispositif de soupape de sortie (44), en cas de transfert du dispositif de soupape d'entrée (44) à un état de fonctionnement ouvert, pouvant être transféré par le dispositif d'accouplement dans un état de fonctionnement ouvert.

7. Agencement selon l'une quelconque des revendications 1 à 6, **caractérisé en ce qu'**il est prévu un dispositif de soupape de sortie supplémentaire (44) réalisé avec un dispositif de ressort supplémentaire, le dispositif de ressort supplémentaire sollicitant le dispositif de soupape de sortie supplémentaire (44) avec une force de ressort dans la direction d'un état de fonctionnement fermé.

8. Agencement selon la revendication 7, **caractérisé en ce que** le dispositif de soupape de sortie supplémentaire (44) est connecté par le biais d'un dispositif d'accouplement supplémentaire au dispositif de soupape d'entrée (44) et/ou au dispositif de soupape de sortie (44), le dispositif de soupape de sortie supplémentaire (44), en cas de transfert du dispositif de soupape d'entrée (44) et/ou du dispositif de soupape de sortie (44) dans un état de fonctionnement ouvert, pouvant être transféré par le dispositif d'accouplement supplémentaire dans un état de fonctionnement ouvert.

9. Agencement selon l'une quelconque des revendications 1 à 8, **caractérisé en ce qu'**un dispositif d'entrée supplémentaire (51) est prévu, par le biais duquel, dans l'état monté de l'unité structurelle (25 ; 50), un réservoir de fluide hydraulique (18) peut être rempli.

10. Agencement selon l'une quelconque des revendications 1 à 9, **caractérisé en ce qu'**un dispositif de mesure (27) est réalisé en tant que dispositif de visualisation au moyen duquel un niveau de remplissage d'un fluide hydraulique se trouvant dans le réservoir de fluide hydraulique (18) peut être détecté visuellement.

11. Agencement selon l'une quelconque des revendications 1 à 10, **caractérisé en ce qu'**un dispositif de mesure (32) est réalisé sous forme de dispositif de capteur.

12. Agencement selon la revendication 11, **caractérisé en ce que** le dispositif de capteur (32) est réalisé pour déterminer le niveau de remplissage du fluide hydraulique sous forme de dispositif de capteur à mesure inductive, capacitive ou magnétique.

13. Agencement selon l'une quelconque des revendications 11 et 12, **caractérisé en ce qu'**un axe longitudinal (34) du dispositif de capteur (32) forme un angle (36) avec une surface extérieure (29), opposée à un espace intérieur du réservoir de fluide hydraulique (18), ou une surface intérieure (35) du dispositif de fixation (26), tournée vers l'espace intérieur du réservoir de fluide hydraulique (18).
